# EUROPÄISCHE PATENTANMELDUNG

(11) **EP 1 426 947 A2**
(43) Veröffentlichungstag der Anmeldung: **09.06.2004**
(21) Anmeldenummer: 03015485.0
(22) Anmeldetag: 09.07.2003
(51) Int. Cl.: G11B 19/02

(54) **Verfahren und Vorrichtung zur Darstellung multimedialer Inhalte eines Datenträgers**

(30) Priorität: 05.12.2002 EP 02027199
(71) Anmelder: Walzinski, Klaus, 31785 Hameln (DE)
(72) Erfinder: Walzinski, Klaus, 31785 Hameln (DE)
(74) Vertreter: Söffge, Karen

(57) **Zusammenfassung**

Mit der vorliegenden Erfindung wird ein Verfahren und eine Vorrichtung mit einem Datenträger (1) vorgestellt, insbesondere einer CD mit digitalen Daten multimedialen Inhalts, wobei die digitalen Daten Anweisungs-Signale beinhalten, die in ihrer technischen Gesamtheit Bilder und Schriftzeichen auf dem Bildschirm eines herkömmlichen Lesegerätes (2), z.B. eines Computers oder DVD-Players, erzeugen und in ihrer Zusammenstellung eine Anleitung zum bestimmungsgemäßen Gebrauch von Handlungsabläufen, wie beispielsweise bei Gebrauchsanweisungen, führen. Dabei spielen die bewegten Bilder und Schriftzeichen von realen und virtuelle Personen und Gegenständen und Produkten eine besondere Rolle, was mittels einer speziellen Steuerung des Lesegrätes (2) bewirkt wird.

## Beschreibung

Die vorliegende Erfindung befasst sich mit einem Verfahren und mit einer Vorrichtung mit einem Datenträger multimedialen Inhalts, insbesondere mit einem Datenträger, der bewegte Bilder und Schriftzeichen auf dem Bildschirm eines Computers wiedergibt.

Derartige Datenträger sind im Stand der Technik aus der DE 198 01 673 A1 bekannt. Dieser Druckschrift ist zu entnehmen, dass Texte verschiedener Wissensbereiche auf CD-ROM bzw. DVD oder andere Speichermedien zu speichern sind, um sie später bei Bedarf für bestimmte Anwendungen mehrmals zu rekapitulieren, oder im Falle eines Sachbuches dieses von Zeit zu Zeit zu aktualisieren oder zu ändern, ohne das gesamte Buch neu zu schreiben.

Ferner ist es allgemeiner Stand der Technik, Gebrauchsanleitungen eines bestimmten Gegenstandes auf dem Gegenstand selbst aufzudrucken oder in Form eines Beiblattes der Verpackung des Gegenstandes beizulegen. Als nachteilig wird es im Allgemeinen bei derartigen Gebrauchsanleitungen empfunden, dass sie die einzelnen Verfahrensschritte zu abstrakt aus der Sicht des Fachmannes beschreiben und dabei für die Allgemeinheit unverständlich und damit unbrauchbar machen. Ferner genügen sie oftmals nicht den neuesten europäischen DIN-Vorschriften, weil sie aus einer anderen Sprache nur unzureichend sinngemäß übersetzt wurden. Der Anwender ist daher oftmals gezwungen, sich selbst in zeitraubenden Vorversuchen ein Bild von den wohlgemeinten Vorstellungen des Beschreibenden zu machen.

Bei diesen Gebrauchsanweisungen beispielsweise wird es im Allgemeinen als nachteilig empfunden, dass sie die einzelnen Artikel zwar gut beschreiben, aber die Gebrauchsanweisung nicht in der Weise abgefasst ist, die der Endverbraucher gern hätte, um sich den Zusammenbau des angebotenen Artikel vorstellen zu können, damit seine Entscheidung zum Kauf des Artikels erleichtert wird. Der Anwender ist daher oftmals gezwungen, sich selbst in zeitraubenden Vorversuchen ein Bild von den wohlgemeinten Vorstellungen des Beschreibenden zu machen.

Daher ist es Aufgabe der vorliegenden Erfindung, komplexe technische Probleme und Handlungsabläufe in allgemein verständlicher Form darzustellen.

Diese Aufgabe wird mit den kennzeichnenden Merkmalen der Hauptansprüche gelöst.

Weitere erfindungswesentliche Merkmale sind den Unteransprüchen zu entnehmen.

Das erfindungsgemäße Verfahren zur animierten Darstellung von Handlungsabläufen mit einem Datenträger mit Daten multimedialen Inhalts, wobei die Daten des beliebigen Datenträgers Anweisungs-Signale beinhalten, die in ihrer technischen Gesamtheit bewegte Bilder und Schriftzeichen auf dem Bildschirm eines herkömmlichen Lesegerätes, z.B. eines Computers erzeugen, ist dadurch gekennzeichnet, dass die bewegten Bilder und Zeichen reale und virtuelle Gegenstände und Personen wiedergeben und durch eine erfindungsgemäße Steuerung des Lesegerätes vorbestimmte Datenbereiche des digitalen Datenträgers zur Darstellung graphischer Abläufe durch ein interaktives Signal beliebig oft wiederholbar macht. Das besondere an dieser Darstellungsart ist es, dass dem Betrachter bzw. dem Endverbraucher eine umfassende und verbesserte Information über das entsprechende Produkt in die Hand gegeben wird, um bei seiner Entscheidungsfindung die Wahl zu treffen, die seinen Vorstellungen am nächsten kommt. Dies ist sowohl für den Verbraucher als auch für den Anbieter von Vorteil.

Der Datenträger, insbesondere CD, mit digitalen Daten multimedialen Inhalts, weist vorteilhaft digitale Daten Anweisungs-Signalen auf, die in ihrer technischen Gesamtheit Bilder und Schriftzeichen auf dem Bildschirm eines herkömmlichen Lesegerätes, z.B. eines Computers, erzeugen und in ihrer Zusammenstellung eine Anleitung zum technischen Handeln ergeben. Besonders vorteilhaft ist es, dass die Bilder und Schriftzeichen reale und virtuelle Personen wiedergeben, die die technischen Handlungsabläufe in bewegter Form darstellen.

Vorteilhaft sind Datenträger, dessen multimediale Daten mit Hilfe eines geeigneten Lesegeräts ausgelesen werden können, wobei die gespeicherten multimedialen Daten beinhalten, deren Anwendung nicht ohne weiteres erkennbar ist und durch bewegte Bilder zusammen mit jeder beliebigen Sprache verdeutlicht werden können.

Vorteilhaft sind Datenträger, dessen multimediale Daten mit Hilfe eines geeigneten Lesegeräts ausgelesen werden, dadurch gekennzeichnet, dass die gespeicherten multimedialen Daten eine Gebrauchs- oder Bauanleitung für Geräte oder Behältnisse oder Formulare oder Rezepturen beinhalten, deren Anwendung nicht ohne weiteres erkennbar ist. Die der Erfindung zugrunde liegende Methode zur Verdeutlichung der Handhabung von Geräten, Behältnissen, Formularen oder Rezepturen hebt sich dadurch hervor, dass die Gebrauchsanweisung eines Gerätes, Behältnisses, Formulars, Rezeptur auf einem Datenträger audio-visuell gespeichert wird und mit Hilfe eines speziellen Steuerprogramms im Lesegerät ausgelesen wird.

In der Regel sind die Rezepturen; beispielsweise Kochrezepte, Medikament-Dosierungen, Körperertüchtigungsabläufe oder Anleitungen zur Herstellung einer bestimmten Anstrichfarbe bei Wohnungsrenovierungen.

Vorteilhaft ist es ferner, dass der Datenträger mit jedem herkömmlichen Lesegerät ausgelesen werden kann, das in naher Zukunft allen Haushalten zur Verfügung stehen wird. Die Tatsache, dass auf dem Datenträger audio-visuell technische Handlungsabläufe gespeichert sind und mit Hilfe eines speziellen Steuerprogramms eines herkömmlichen Lesegeräts ausgelesen werden, macht die Erfindung für den Anwender besonders attraktiv.

Die Lesegeräte, für die die digitalen Daten auf dem Datenträger anzuwenden sind, werden erfahrungsgemäß elektrisch, mechanisch, elektro-mechanisch, durch Wind oder durch Wasser oder durch Strahlung betrieben. Dabei ist es selbstverständlich, dass die Behältnisse mechanisch aufgebaut sind.

Das Lesegerät, mit dem die gespeicherten multimedialen Daten vom Datenträger herausgelesen werden, ist beispielsweise ein Computer oder Videorecorder oder DVD-Player.

Vorteilhaft ist es ferner, die auf dem Datenträger gespeicherte multimedialen Daten einer Gebrauchsanweisung mit Hilfe eines Steuerprogramms anzusteuern, so dass die verschiedenen Schritte gezielt und einzeln auslesbar sind, wodurch jeder Gedankengang beliebig oft wiederholt werden kann. Dabei ist es zweckmäßig, dass das Steuerprogramm unabhängig von dem jeweiligen Katalog im Lesegerät gespeichert ist und jeder Katalog, der mit dem Steuerprogramm verwendet werden soll, nur mit einer verschlüsselten Codierung als Zugang zum Programm versehen ist.

Ferner ist es vorteilhaft, die einzelnen Schritte in den multimedialen Daten audio-visuell wiederzugeben und bei Bedarf mit kurzen Sätzen im Animations-Bild auf dem Monitor des Wiedergabegeräts zu untermauern.

Als Datenträger kommen im Prinzip alle elektronischen Speichermedien in Frage, insbesondere CD-ROM, DVD, Smart-Cards, ZIP-Disc und Magnetbänder.

Von großer Wichtigkeit für die vorliegende Erfindung ist es, dass der Datenträger, in welcher Form er auch vorliegen mag, auf CD-ROM zu überspielen, da durch die Kompatibilität der Datenträger der Einsatz im DVD-Player ermöglicht wird. Durch Hinterlegen der Sprache und des Tones kann durch Anklicken der Landesfahne die jeweilige Sprache ausgewählt werden, was hauptsächlich zur Internationalisierung beiträgt.

Vorteilhaft ist es auch, das Steuerprogramm und/oder die multimedialen Daten im Internet auf der Homepage eines Betriebes in Verbindung mit dem jeweiligen Gegenstand zur Verfügung zu stellen, um dem Anwender Gelegenheit zu geben, bei Verlust des Datenträgers mit den entsprechenden Daten diese neu herunterzuladen und Korrekturen in dem Datensatz leicht vorzunehmen. Das Herunterladen eines derartigen Steuerprogramms bzw. einer Gebrauchsanweisung ist jedoch nur mit Zustimmung des Betriebes der Homepage bzw. mit Zustimmung des Lizenzgebers der vorliegenden Erfindung möglich.

Vorteilhaft ist es ferner, dass das Steuerprogramm mit dem Anbieter eine Internetverknüpfung herstellt, sobald der Anwender durch "Klicken" auf einen vorbestimmten Button im Programm dies zu erkennen gibt.

Ferner ist es vorteilhaft, dass durch die Internetverknüpfung mit dem Anbieter automatisch ein e-mail-Fenster auf dem Bildschirm geöffnet wird, in welchem Bestellungen, Nachbestellungen, Reklamationen bzw. fehlender Teile bei der "Hotline" des Herstellers vorgenommen werden.

Für manche Anwendungsfälle ist es vorteilhaft, die Bilder in der Präsentation dreidimensional darzustellen. Dabei können Listen zusammengestellt werden, die dem Anwender die Möglichkeit eröffnen, in Ruhe vor dem Bildschirm die Gegenstände entsprechend seinen Bedürfnissen auszusuchen.

Vorteilhaft ist es auch, den in der Verpackung eines zu verkaufenden Gegenstands beiliegenden erfindungsgemäßen Datenträger mit einem Kopierschutz herkömmlicher Art zu versehen.

Ferner ist es vorteilhaft, die Daten mit Werbung jeglicher Art zu versehen, wie beispielsweise Anzeigen von Werbeträgern oder Präsentationen von Produkten oder Firmenprofilen, wozu selbstverständlich die Zustimmung des Urhebers notwendig ist.

Im nun Folgenden wird die Erfindung anhand der Zeichnungen im Detail näher erläutert. Es zeigt
- Fig. 1: ein Blockdiagramm, das schematisch die wesentlichen Komponenten der vorliegenden Erfindung wiedergibt;
- Fig. 2: ein allgemeines Flußdiagramm der Daten zur audio-visuellen Darstellung des multimedialen Inhalts der Datenträger (1).

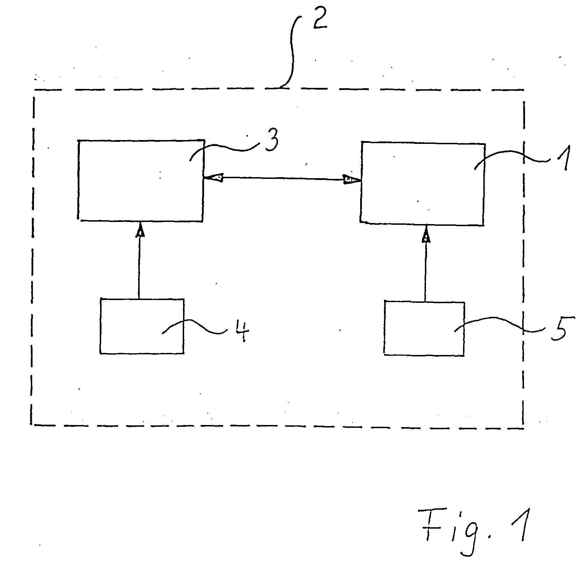

In Fig. 1 ist mit der gestrichelten Linie das Lesegerät 2, mit dem das Speichermedium gelesen oder abgespielt wird, symbolisiert. Das Lesegerät 2 ist jeweils ein herkömmliches Gerät, mit dem der entsprechende Datenträger ausgelesen wird. Für den Fall, dass die multimedialen Daten auf einer CD-ROM gespeichert sind, ist zum Auslesen der CD-ROM ein CD-Laufwerk und ein Computer notwendig. Für das Auslesen eines Magnetbandes beispielsweise ist ein kommerzieller Videorecorder geeignet. Im vorliegenden Ausführungsbeispiel der Erfindung wird zunächst ein Steuerprogramm 3 im Speicher des entsprechenden Lesegeräts 2 gespeichert. Das Steuerprogramm 3 ist der Art ausgelegt, dass es jeden beliebigen Datensatz (Katalog) unterschiedlicher Gegenstände ansteuern kann, wobei die Ansteuerung nur mit einer verschlüsselten Codierung vorgenommen werden kann. Die verschlüsselte Codierung kann jede Art einer Datensicherungscodierung entsprechen.

Nachdem ein Steuerprogramm im Lesegerät gespeichert ist, wird der Datenträger 1 dem Lesegerät 2 zugeführt und vom Steuerprogramm 3 mit der entsprechenden verschlüsselten Codierung angesteuert. Der Datenträger 1 wurde vorher auf beliebige Weise mit den multimedialen Daten 5 (Katalog) beladen, was für den Fall einer CD-ROM durch Einbrennen der Daten des Katalogs oder der Präsentation mit einem herkömmlichen Brenner vorgenommen wird. In gleicher Weise wird die Speicherung der Daten 5 des Katalogs oder allgemeinen Präsentation entsprechend bei anderen Speichermedien durchgeführt. Sobald das Steuerprogramm 3 und der Datenträger 1 dem Lesegerät 2 zugeführt wurde, werden die Daten aus den Programmen zwischen dem Datenträger 1 und dem Steuerprogramm gegenseitig ausgetauscht. Mit der Tastatur 4 oder einem anderen interaktiven Steuerungsmittel des jeweiligen Lesegeräts 2 wird dem Steuerprogramm 3 gesagt, welcher Schritt in dem Katalog vorgeführt bzw. angezeigt werden soll.

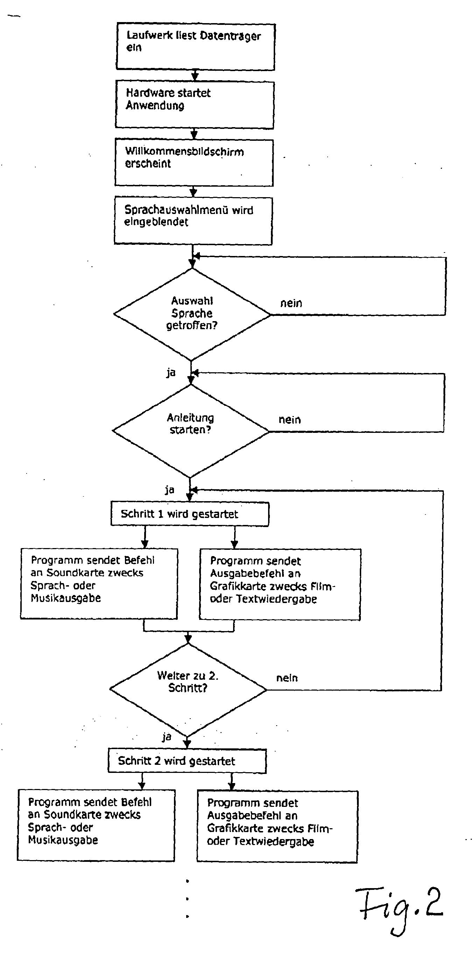

In Fig. 2 ist ein allgemeines Flußdiagramm der Daten des Datenträgers 1 zusammen mit dem Steuerprogramm 3 im Lesegerät 2 dargestellt. Der Datenträger 1 enthält die multimedialen Daten, die vor der Herstellung des Datenträgers 1 aus einer Vielzahl von Unterprogrammen zusammengestellt wurden und dann mit einem geeigneten Compiler (z.B. Mediator) so aufbereitet werden, dass sie unabhängig vom Betriebssystem in jedem herkömmlichen Anzeigegerät in nun folgenden Schritten abgespielt werden können: Nachdem der Datenträger 1 in das Lesegerät 2 eingelegt ist, wird durch ein internes Signal die gesamte Hardware zur Darstellung des multimedialen Inhalts des Datenträgers 1 gestartet, wobei nach einem bestimmten Zeitintervall mit einem interaktiven Signal die weiteren Schritte im Programm wahlweise gestartet werden und entsprechend der getroffenen Wahl das Programm automatisch die jeweiligen Hardwarekomponenten ansteuert, was im ersten Schritt (Schritt 1) durchgeführt wird. Der Zugang zu diesem Datenfluß ist u.a. möglich, wenn das Steuerprogramm 3 vorher im Lesegerät 2 implementiert ist. Im Schritt 2 ist zu entscheiden, welchen Teilbereich der multimedialen Daten der Anwender auswählen will, wodurch die entsprechenden Hardwarekomponenten (z.B. Soundkarte und/oder Grafikkarte) ein Starsignal erhalten, so dass der Datenfluß kontinuierlich bis zum nächsten Programmstop fortgeführt wird.

## Patentansprüche

1. Verfahren zur animierten Darstellung von Daten mit einem Datenträger (1) mit digitalen Daten multimedialen Inhalts, wobei die Daten des beliebigen Datenträgers (1) Anweisungs-Signale beinhalten, die in ihrer technischen Gesamtheit bewegte Bilder und Schriftzeichen auf dem Bildschirm eines herkömmlichen Lesegerätes, z.B. eines Computers erzeugen, **dadurch gekennzeichnet, dass** die bewegten Bilder und Zeichen reale und virtuelle Gegenstände und Personen wiedergeben und durch eine Steuerung (3) des Lesegerätes (2) vorbestimmte Datenbereiche des digitalen Datenträgers zur Darstellung graphischer Abläufe durch ein interaktives Signal beliebig oft wiederholbar macht.

2. Verfahren nach Anspruch 1 zur audio-visuellen Wahrnehmung von Daten einer Gebrauchsanweisung, **dadurch gekennzeichnet, dass** die multimedialen Daten mit Hilfe einer Vielzahl von Unterprogrammen zusammengestellt und einem Compiler zugeführt werden, in dem, zusammen mit einem Steuerprogramm (3), die Daten derart compiliert werden, dass sie unabhängig von der Art und/oder dem jeweiligen Betriebssystem des Lesegerätes(2) sind.

3. Verfahren nach Anspruch 1, **dadurch gekennzeichnet, dass** digitale Daten multimedialen Inhalts auf einem Datenträger (1) gespeichert werden, wobei die digitalen Daten Anweisungs-Signale beinhalten, die in ihrer technischen Gesamtheit mit Hilfe eines Steuerprogramms (3) bewegte Bilder und Schriftzeichen auf dem Bildschirm eines herkömmlichen Lesegerätes (2), z.B. eines Computers, erzeugen.

4. Verfahren nach Anspruch 1, **dadurch gekennzeichnet, dass** ein Steuerprogramm (3) unabhängig von den multimedialen Daten (5) auf dem Datenträger (1) im Lesegerät gespeichert ist und mit einer verschlüsselten Codierung als Zugang zum Programm der multimedialen Daten (5) versehen ist.

5. Verfahren nach Anspruch 1, **dadurch gekennzeichnet, dass** das Steuerprogramm (3) derart aufgebaut ist, dass die multimedialen Daten (5) schrittweise abgefragt werden kann, wobei die einzelnen Schritte in einer Übersichtstabelle am Anfang der multimedialen Daten (5) äufgelistet sind.

6. Verfahren nach einem der vorangegangenen Ansprüche, **dadurch gekennzeichnet, dass** die einzelnen Schritte in den multimedialen Daten (5) beliebig oft wiederholt werden können.

7. Verfahren nach einem der vorangegangenen Ansprüche, **dadurch gekennzeichnet, dass** die einzelnen Schritte in den multimedialen Daten (5) audio-visuell beschrieben werden.

8. Verfahren nach einem der vorangegangenen Ansprüche, **dadurch gekennzeichnet, dass** als Datenträger (1) für die multimedialen Daten (5) und/oder das Steuerprogramm (3) eine CD, DVD, Smart-Card, ZIP-Disc oder Magnetband verwendet wird.

9. Verfahren nach einem der vorangegangenen Ansprüche, **dadurch gekennzeichnet, dass** den multimedialen Daten (5) an geeigneter Stelle Werbung eines Werbeträgers hinzugefügt wird.

10. Verfahren nach einem der vorangegangenen Ansprüche, **dadurch gekennzeichnet, dass** als geeignete Stelle in den multimedialen Daten (5) der Anfang, im Text oder der Rand des Bildschirms herangezogen wird.

11. Verfahren nach einem der vorangegangenen Ansprüche, **dadurch gekennzeichnet, dass** den multimedialen Daten (5) an geeigneter Stelle eine Präsentation einer Firma oder eines Firmenprofils eingeblendet wird.

12. Verfahren nach einem der vorangegangenen Ansprüche, **dadurch gekennzeichnet, dass** das Steuerprogramm (3) eine Internetverknüpfung mit dem Anbieter oder Hersteller des Gegenstands herstellt, sobald der Anwender durch "Klicken" auf einen vorbestimmten Button dies zu erkennen gibt.

13. Verfahren nach einem der vorangegangenen Ansprüche, **dadurch gekennzeichnet, dass** das durch die Internetverknüpfung automatisch ein e-mail Fenster auf dem Bildschirm geöffnet wird, in welchem Bestellungen, Nachbestellungen und Reklamationen beim Anbieter vorgenommen werden.

14. Anzeigevorrichtung mit einem digitalen Datenträger (1) multimedialen Inhalts, der Daten aufweist, die in Ihrer Gesamtheit bewegte Bilder und Schriftzeichen von Gebrauchsanweisungen auf einem Bildschirm eines herkömmlichen Lesegerätes (2), z.B. eines Computers, erzeugen, **gekennzeichnet durch** eine Steuerung, die im Gehäuse des Lesegerätes (2) installiert ist und vorbestimmte Datenbereiche des Datenträgers (1) zur Darstellung graphischer Abläufe **durch** ein interaktives Signal beliebig oft wiederholbar macht.

15. Anzeigevorrichtung nach Anspruch 13, **dadurch gekennzeichnet, dass** die Lesegeräte (2) zum Auslesen der digitalen Daten multimedialen Inhalts elektro-mechanisch betrieben werden.

16. Anzeigevorrichtung nach Anspruch 13, **dadurch gekennzeichnet, dass** die multimedialen Daten mechanisch aufgebaute Gegenstände darstellen.

17. Anzeigevorrichtung nach Anspruch 13, **dadurch gekennzeichnet, dass** die multimedialen Daten Bedienungsanleitungen, Gebrauchsanleitungen, Aufbauanleitungen, Rezepturen, Kochrezepte, Medikament-Dosierungen, Körperertüchtigungsabläufe oder dgl. beinhalten.

18. Anzeigevorrichtung nach Anspruch 13, **dadurch gekennzeichnet, dass** das Lesegerät (2) ein Audio-Videorecorder ist.

19. Anzeigevorrichtung nach Anspruch 13, **dadurch gekennzeichnet, dass** die auf dem Datenträger gespeicherten Daten bewegte Bilder von realen oder virtuellen Gegenständen und Personen erzeugen.

20. Anzeigevorrichtung nach Anspruch 13, **dadurch gekennzeichnet, dass** der Datenträger (1) für das Steuerprogramm (3) eine CD, DVD, Smart-Card, ZIP-Disc, Magnetband ist.

21. Anzeigevorrichtung nach Anspruch 1, **dadurch gekennzeichnet, dass** die gespeicherten multimedialen Daten und/oder ein Steuerprogramm (3) der Verpackung des darzustellenden Gerätes oder des Behältnisses beigefügt ist.

22. Anzeigevorrichtung nach Anspruch 13, **dadurch gekennzeichnet, dass** die gespeicherten multimedialen Daten und/oder das Steuerprogramm (3) der dar zustellenden Gebrauchsanweisung oder ähnliches auf dem Datenträger (1) gespeichert sind.

23. Datenträger (1) multimedialen Inhalts, der Daten aufweist, die in Ihrer Gesamtheit bewegte Bilder und Schriftzeichen von Katalogen auf einem Bildschirm eines herkömmlichen Lesegerätes (2), z.B. eines Computers, erzeugen, **gekennzeichnet durch** Steuerungsdaten, die vorbestimmte Datenbereiche des Datenträgers (1) zur Darstellung graphischer Abläufe **durch** ein interaktives Signal beliebig oft in ihrem Sinngehalt wiederholbar machen und die Daten sog. Links herstellen, die eine Verbindung zu Anbietern und Herstellern ermöglichen.
